# EUROPEAN PATENT APPLICATION

(11) **EP 0 059 691 A1**
(43) Date of publication of application: **08.09.1982**
(21) Application number: 82830040.0
(22) Date of filing: 25.02.1982
(51) Int. Cl.: B60T 1/06, H02K 49/04, B60T 13/74

(54) **Improvements in vehicle axles provided with an incorporated electric brake**

(30) Priority: 03.03.1981 ES 500015
(71) Applicant: FRENOS ELECTRICOS UNIDOS S.A., E-31014 Pamplona (ES)
(72) Inventor: Esparza del Barrio, Juan Jose, Pamplona (ES)
(74) Representative: Zorzoli, Franco

(57) **Abstract**

Improvements in vehicle axles provided with an incorporated electric brake. The axle is provided with a differential in which two planetary pinions mesh with the crown wheel of the differential at diametrically opposed points, two brake flywheels, both belonging to an equal number of electric brakes having to be mounted on the lined up axes of said pinions, the flange holding the coils of said electric brakes being secured to the body of the differential.

## Description

This invention relates to improvements in vehicle axles provided with an incorporated electric brake, particularly applicable, for use, to trailers and the like.

Electric brakes actually used and applied to heavy vehicles act on the vehicle driving gear locking it and producing the desired braking effect. Owing to their technical features, it is not possible to set up the above mentioned electric brakes on the rear axles of trailers independently, as these very trailers require an efficient braking independent of the tractor.

The object of the present invention is to solve the above mentioned problem by accomplishing an axle provid ed with an incorporated electric brake which, owing to its particular features, enables to obtain an efficient braking action on the rear axle of trailers.

According to the invention, the axle is provided with a differential with the crown wheel of which mesh two planetary pinions, at diametrically opposed points; on the axle lines of said pinions have to be mounted both the braking flywheels belonging to an equal number of electric brakes, the flangesholding the coils of said brakes being fixed to the body of the differential.

During a normal running of the vehicle, the planetary pinions will rotate under the action of the crown wheel which, in turn, is driven by the rotary motion of wheels, through the axle shafts. When the electric brake is operated the planetary pinion will counteract the motion of the crown wheel thus stopping the wheels, more or less strongly, according to the intensity of braking which is carried out by means of a drive mounted for the purpose in the driver's cab.

Not only the planetary pinions allow to obtain an efficient braking, but also the elimination, on the crown wheel, of moments which may create a certain backlash in the latter and even future failures.

The particular features of the axle according to the present invention allow to replace a conventional axle by the one of the present invention by simply carrying out the electrical connections from the controls to the system applied to the trailer.

The differential casing may consist of a cylindrical chamber to the ends of which, shaft sleeves are coupled and fixed, while two diametrically opposed central openings are provided on the walls thereof, in each of said openings being secured a bushing for the planetary pinions as well as the flange holding the coils of the electric brakes, which surrounds the bushing on every side and is disposed outside the cylindrical chamber, where the latter is provided with supporting surfaces, next to the openings.

Preferably, said planetary pinions should be mounted together with three roller bearings, two of them being disposed between the pinion axis and the wall of the bushing and the third one being accommodated in its housing placed at the top of said pinion.

The differential casing may also consist of a conventional rear bridge which is closed by two opposed frameworks, each of them supporting a bushing for the assembling of the pinions. In the inside, said frameworks are already provided with a support suitable to receive the truncated portion of said pinions and are arranged so that they can receive an adjusting screw suitable to adjust the crown wheel and the differential. The flanges holding the coils of the electric brakes will be secured to the outside of said frameworks.

Further features and advantages of the invention will become more evident from the detailed description of embodiments of the same given hereinafter, by way of example only, with reference to the accompanying drawings, in which:
- Fig. 1 is a section of an axle constructed according to the invention;
- Fig. 2 is a section similar to Fig. 1 where an alternative construction of the differential body is shown.

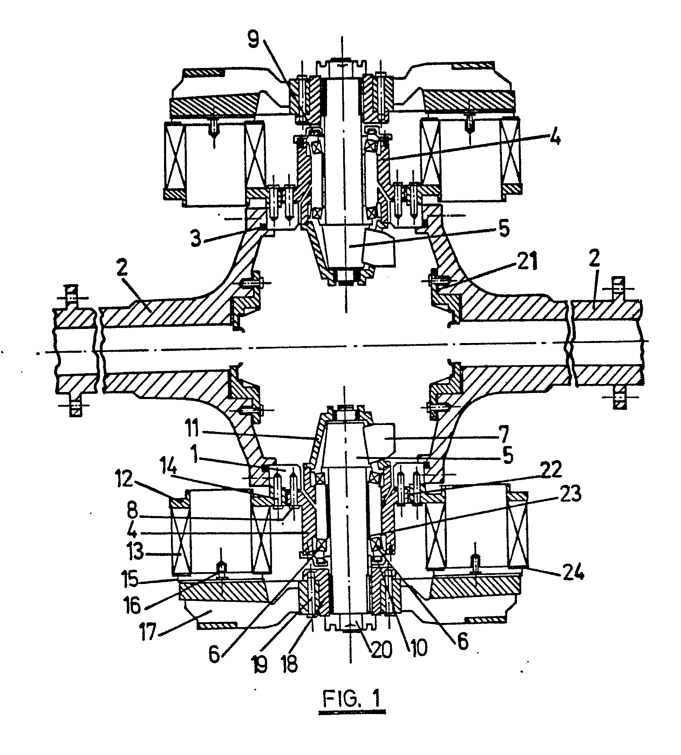

As shown in Fig. 1, according to the invention, the axle must be provided with a differential, the casing of which consists of a cylindrical chamber 1 to the opened ends of which are fixed two identical shaft sleeves 2, an 0-ring 3 being interposed therebetween. The cylindric al chamber has two diametrically opposed openings in each of them being fixed a bushing 4 which enables the assembling of an equal number of pinions 5. The assembling of these pinions 5 is carried out together with two roller bearings 6 disposed between the axis of pinions 5 and the bushing 4 and a front roller bearing 7 accommodated in its housing, which has to be placed on top of the planetary pinion 5. In this way it is possible to reach a greater stiffness and more reliability of service of the whole.

The pinions 5 mesh with the differential crown wheel, not shown in the figure, at diametrically opposed points, which avoids the formation of moments on the crown wheel, as these moments could create a certain backlash and even cause the breaking of the same crown wheel.

A rotary motion is transmitted to the crown wheel of the differential by the axle shafts of the wheels which turn inside the shaft sleeves 2, by means of corresponding intermediate planetary gears and crown wheels.

The bushing 4 are fixed to the cylindrical chamber 1 by means of screws 8. Rearwards, the bushing 4 must be closed by means of a stop 9 and a stop cover 10. The planetary pinions 5 have to be protected on top by the framework 11 against which they bear by means of the front rolling bearing 7.

To the cylindrical chamber 1 are also fastened, near the bushings 4, both the flanges 12 holding the inductance coils 13 belonging to an equal number of electric brakes. The flange 12 has to be fixed to the cylindrical chamber by means of screws 14. The bottom 15 is fixed to the coil by means of screws 16. The flywheel 17 of the brake is mounted on the flanged bush 18 by means of screw 19, so that said bush is mounted on the axis of the pinions, at the end of which is placed the nut 20.

According to what described above, the motion of the wheels is transmitted, through the axle shafts, to the crown wheel of the differential by means of intermediate planetary gears and crown wheels.

The differential assures the independent motion of each wheel at a bending while on a right path it behaves like a continuous axle.

When the brake control is operated, the coils 13 are energized by the battery current and the pinions will counteract the motion of the crown wheel, thus causing the desired braking effect. When the brakes are set up the adjustment of the different points is carried out by means of the clearances 21, 22, 23 and a washer 24 is provided in order to protect the coil.

The arrangement of the invention allows to disassemble the bushings and the corresponding pinions independently, as well as the framework or the flange holding the coils without being obliged to disassemble any other piece first, except the flywheel which has to be mounted at the end of the pinion. In the same way the shaft sleeves can be taken off without being obliged to carry out any previous disassembling.

It is understood that the brake of the present invention. allows to couple the electric brakes indistinctly to 2, 16 or any different number of coils, at will.

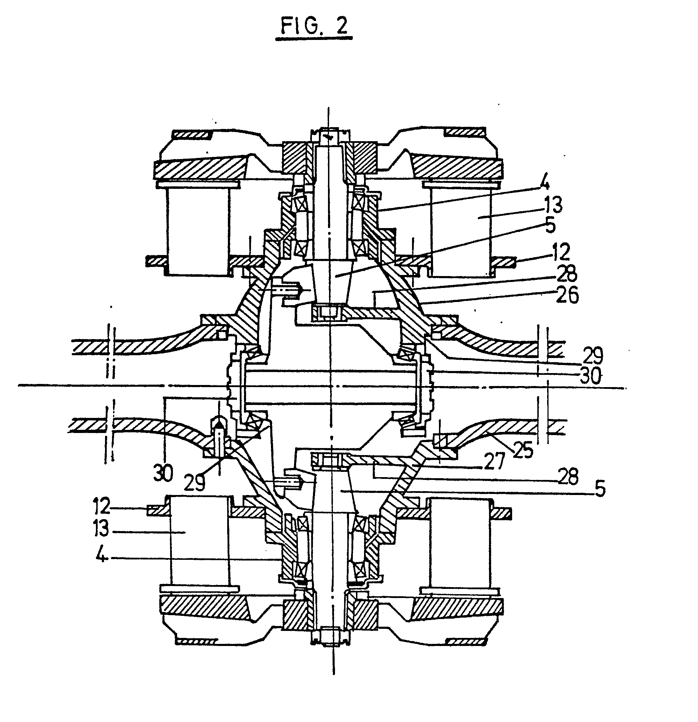

We turn now to Fig. 2 where the same reference numerals indicate the same pieces as in Fig. 1. In this case the differential casing consists of a conventional bridge 15 which is closed by two opposed frameworks 26 and 27 supporting the bushings 4 which allow the assembling of the planetary pinions 5. The above frameworks are provided with an inner support 28, holding up the top of said pinions. In addition, they are inwardly provided with a support 29 holding the adjustment screw 30 of the crown wheel and differential. Outwardly, each framework 26 and 27 is provided with the corresponding flange holding the coils 13 of the electric brakes; the other features are identical to those seen in Fig. 1.

Obviously the foregoing description of the preferred embodiments of the invention is not intended in a limiting sense and modifications can be carried out without departing from the scope and the spirit of the invention.

## Claims

1) Improvements in vehicle axles provided with an incorporated electric brake, characterized in that the axle is provided with a differential in which two planetary pionions (5) mesh with the crown wheel of the differential at diametrically opposed points, two brake flywheels (17), both belonging to an equal number of electric brakes having to be mounted on the lined up axes of said pinions, the flange holding the coils (12) of said electric brakes being secured to the casing of the differential.

2) Improvements according to claim 1, characterized in that the casing of the differential comprises a cylindrical chamber (1), to the ends of which, shaft sleeves (2) are coupled and fixed, while two diametrically opposed central openings are provided on the walls thereof, in each of said openings being secured a bushing (4) for the planetary pinions (5) as well as the flange (12) holding the coils of the electric brakes which surrounds the bushing (4) on every side and is disposed outside the cylindrical chamber (1), the latter being provided,next to the openings, with supporting surfaces for the above mentioned flanges (12).

3) Improvements according to claim 2, characterized in that said planetary pinions (5) should be mounted together with two roller bearings (6) disposed between the pinion axis and the wall of the bushing (4) and with an inner roller bearing (7) accommodated in its housing, placed at the top of said pinion (5) between the latter and a protection cover fixed to the bushing (4).

4) Improvements according to claim 1, characterized in that the casing of the differential consists of a rear bridge (25), which is closed by two opposed frameworks (26 - 27) each of them supporting a bushing (4) for the assembling of the pinions (5), each framework being also provided with an inner support (28) suitable to receive the truncated portion of said pinions (5) and with an adjusting screw (30) for the crown wheel and the differential, said flanges (12) holding the coils being mounted on the outside of said frameworks (26 - 27).
